Europäisches Patentamt

European Patent Office

Office européen des brevets

(19)

(11) Numéro de publication: **0 348 255 B1**

(12) **FASCICULE DE BREVET EUROPEEN**

(45) Date de publication de fascicule du brevet: **11.01.95**

(51) Int. Cl.⁶: **C08G 12/12**, C08K 5/34, C08L 61/20, C08L 97/02, C09J 175/02

(21) Numéro de dépôt: **89401430.7**

(22) Date de dépôt: **25.05.89**

(54) **Nouveau procédé de durcissement de résines aminoplastes.**

(30) Priorité: **03.06.88 FR 8807422**

(43) Date de publication de la demande:
**27.12.89 Bulletin 89/52**

(45) Mention de la délivrance du brevet:
**11.01.95 Bulletin 95/02**

(84) Etats contractants désignés:
**AT BE CH DE ES FR GB GR IT LI LU NL SE**

(56) Documents cités:
**BE-A- 377 424**
**CH-A- 294 027**
**DE-A- 1 653 334**

**PATENT ABSTRACTS OF JAPAN, vol. 7, no. 201 (C-184)[1346], 6 septembre 1983;& JP-A-58 101 144**

**Encyclopedia of Chemical Technology, vol. 2, pages 448-454**

(73) Titulaire: **ELF ATOCHEM S.A.**
**4 & 8, Cours Michelet**
**La Défense 10**
**F-92800 Puteaux (FR)**

(72) Inventeur: **Garrigue, Roger**
**23, rue du Capitaine Escudié**
**F-31000 Toulouse (FR)**
Inventeur: **Lalo, Jack**
**116, avenue St Exupéry**
**F-31400 Toulouse (FR)**
Inventeur: **Vignau, André**
**200, chemin de May Seysses**
**F-31400 Muret (FR)**

(74) Mandataire: **Rochet, Michel et al**
**ELF ATOCHEM S.A.**
**Département Propriété Industrielle**
**4-8, Cours Michelet**
**La Défense 10 - Cedex 42**
**F-92091 Paris-La-Défense (FR)**

Rank Xerox (UK) Business Services
(3.10/3.09/3.3.3)

EP 0 348 255 B1

## Description

La présente invention concerne un nouveau procédé de durcissement de résines aminoplastes, elle a plus particulièrement pour objet un procédé de durcissement de résines urée-formol et de résines urée-formol contenant de la mélamine.

Les résines aminoplastes en particulier les résines urée-formol sont des produits bien connus dans l'industrie du bois. Elles sont fabriquées selon divers procédés qui consistent à condenser de l'urée et du formol dans des conditions variables. Pour le collage du bois, s'agissant en particulier de la fabrication de panneaux de copeaux agglomérés, ces résines sont additionnées d'un catalyseur de durcissement, la mise en oeuvre d'un tel mélange collant à chaud et sous pression permet en présence de copeaux de bois de fabriquer des panneaux particules. Les catalyseurs de durcissement le plus fréquemment utilisés sont généralement des sels d'ammonium tels que sulfate, phosphate, lactate et le plus souvent chlorure d'ammonium.

Les problèmes connus à résoudre lors de l'utilisation de ces catalyseurs pour la réalisation du durcissement des résines aminoplastes sont apparemment incompatibles. En effet, si on met en oeuvre des catalyseurs réactifs on augmente la productivité de la chaine de fabrication des panneaux mais avec le risque de durcir la résine à froid. A l'inverse, si on désire ne pas prendre le risque de durcir la résine à froid, on va choisir un catalyseur peu réactif avec la résine ; dans ces conditions on va diminuer la productivité de la chaine puisque la résine va durcir lentement à chaud. On voit donc qu'il est nécessaire d'aboutir à un compromis de façon à pouvoir résoudre à la fois le problème du durcissement de la résine et celui de la productivité de la chaine. Pour résoudre ces problèmes il est nécessaire de disposer de catalyseurs qui présentent un écart de réactivité suffisant à chaud et à froid.

Le besoin se fait donc sentir de mettre au point un procédé de durcissement de résines aminoplastes permettant à la fois de ne pas durcir la résine prématurément tout en conservant la possibilité de durcir la résine lors de la mise sous presse à chaud des particules de bois encollées ou de plis de bois.

On connaît, par le brevet suisse CH-A-294 027, une composition thermodurcissable, stable à la température ambiante, comprenant une résine thermodurcissable en présence d'un acide et, comme catalyseur latent, un sel quaternaire d'hexaméthylène tétraminium. Le durcissement a lieu à une température comprise entre 135 et 165°C et la technique mise en oeuvre est essentiellement un moulage de poudres.

La présente invention concerne un procédé de durcissement de résines aminoplastes à l'aide d'un catalyseur de durcissement caractérisé en ce que ce catalyseur est constitué d'un sel d'acide fort d'hexaméthylène - tétramine.

Selon une autre caractéristique du procédé de l'invention il est possible de fabriquer le sel d'acide fort d'hexaméthylène tétramine au moment de l'utilisation dans la résine aminoplaste en particulier l'hexaméthylène-tetramine peut être incorporé préalablement à la résine aminoplaste et l'acide fort peut être ensuite ajouté au moment de l'application. Selon une autre caractéristique il est possible d'ajouter à la résine aminoplaste contenant préalablement le sel d'acide fort d'hexaméthylène-tétramine, une quantité supplémentaire d'acide fort ou d'hexaméthylène-tétramine de façon à dépasser les quantités stoechiométriques d'acide fort et d'hexaméthylène-tétramine.

On a en effet trouvé que la mise en oeuvre de sel d'acide fort d'hexaméthylène-tétramine pour le durcissement de résines aminoplastes permettait à la fois de maîtriser le durcissement à froid des résines aminoplastes tout en conservant le potentiel de durcissement à chaud des résines aminoplastes. De plus la mise en oeuvre d'un tel système catalytique conduit à des produits finis : panneaux particules ou contreplaqué qui présentent de bonnes caractéristiques mécaniques dans des conditions d'application variées.

Le procédé de la présente demande consiste à durcir les résines aminoplastes à l'aide d'un catalyseur constitué d'un sel d'acide fort d'hexaméthylène-tétramine. Les sels d'acide forts d'hexaméthylène-tétraminesont fabriqués de façon connue à partir d'une solution aqueuse d'ammoniaque et d'une solution aqueuse de formol, le formol et l'ammoniaque étant utilisés dans un rapport molaire

$$\underline{F}$$

$$(NH_3)$$

de 1,5 . La solution de formol est ajoutée chaude dans la solution d'ammoniaque par coulée. En fin de réaction la solution qui présente un pH fortement basique est acidifiée par addition d'un acide fort en quantité telle que le pH de la solution finale soit compris entre 1 et 7 et de préférence entre 2 et 5. Selon l'invention l'acide est choisi parmi tous les acides forts connus minéraux ou organiques, de préférence on utilise l'acide chlorhydrique ou sulfurique. Il est possible de préparer le sel d'acide fort d'hexaméthylène-tétramine au moment de l'emploi et de l'ajouter ensuite à la résine aminoplaste. Il est aussi possible d'ajouter l'hexaméthylène-tétramine à la résine aminoplaste et d'ajouter l'acide fort au moment de l'application. On peut aussi rajouter à la résine aminoplaste contenant préalablement le sel d'acide fort d'hexaméthylène-tétramine une quantité supplémentaire d'hexaméthylène-tétramine ou d'acide fort. Quel que soit le mode opératoire mis en oeuvre les quantités finales d'hexaméthylène-tétramine ,de formol, et d'acide correspondent à celles indiquées ci-dessus.

La quantité de sel d'acide fort d'hexaméthylène-tétramine mise en oeuvre dans les résines aminoplastes est de façon connue comprise entre 0,1 et 10 % en poids par rapport au poids de à la solution de résine. Les résines aminoplastes utilisées sont les résines connues employées dans l'industrie du bois. Concernant plus particulièrement les résines urée-formol qui contiennent de la mélamine, ces dernières sont fabriquées de façon connue en condensant de l'urée, du formol et de la mélamine dans des rapports molaires

$$\frac{F}{NH_2}$$

compris entre 0,4 à 1, la quantité de mélamine dans ces résines étant comprise entre 0,1 à 10 % en poids par rapport au poids total de la résine.

Les exemples suivants illustrent la présente invention. Toutes les quantités sont exprimées en parties en poids.

Exemple 1

a) Préparation d'une solution de chlorhydrate d'hexaméthylène-tétramine.

Pour la fabrication de ce composé on utilise le dispositif suivant :
- un premier réacteur muni d'un agitateur et d'un thermomètre,
- un second réacteur au dessus du premier réacteur, ce second réacteur étant muni d'une double enveloppe.

On introduit dans le réacteur du bas 590 grammes d'une solution aqueuse d'ammoniaque à 15,35 % (5,33 moles). Dans le réacteur du haut on introduit 354 grammes d'une solution aqueuse de formol à 67,8 % (8 moles), que l'on maintient à 85°C par circulation d'eau chaude dans la double enveloppe.

La solution de formol est coulée dans la solution d'ammoniaque en 30 minutes : cette addition provoque une réaction exothermique. On refroidit le mélange réactionnel à 55 °C, le pH en fin de réaction est de 10,1. On additionne ensuite 140 grammes d'une solution à 35 % d'acide chlorhydrique en 10 minutes de façon que le pH de la solution soit égal à 3,7. La solution finale obtenue contient 20 % de chlorhydrate d'hexaméthylène-tétramine.

b) Mise en oeuvre de la solution de chlorhydrate d'hexaméthylène-tétramine

Afin d'illustrer la différence du comportement avec les résines urée-formol du chlorhydrate d'hexaméthylène-tétramine et d'un catalyseur classique constitué de chlorure d'ammonium, les temps de gel d'une résine urée-formol ont été déterminée à différentes températures.

Dans un premier tube à essai on introduit 10 grammes d'une résine urée-formol présentant un rapport molaire $\frac{F}{U}$ de 1,3 et 1 cm³ d'une solution aqueuse de chlorure d'ammonium à 15 % en masse.

dans un second tube à essai on introduit 10 grammes de la même résine urée-formol et 1,57 grammes d'une solution aqueuse contenant 0, 495 g de chlorhydrate d'hexaméthylène-tétramine et 1,076 gramme d'eau. Dans les deux cas la quantité molaire de chlorhydrate de hexaméthylène-tétramine est équivalente à la quantité molaire de chlorure d'ammonium.

Les tubes à essais sont plongés dans un bain d'huile chaud. Le tableau 1 indique les temps de gel à différentes températures.

Tableau 1

| | Temps de gel à différentes températures (secondes) | | | |
|---|---|---|---|---|
| Température °C | 80 | 100 | 120 | 140 |
| Bain d'huile | | | | |
| Catalyseur 1 | 175 | 130 | 80 | 60 |
| Catalyseur 2 | 565 | 245 | 150 | 120 |
| Catalyseur 1 : Solution de chlorure d'ammonium | | | | |
| Catalyseur 2 : Solution de chlorhydrate d'hexaméthylène-trétramine. | | | | |

## Exemple 2

Trois séries de panneaux particules ont été fabriqués dans les conditions suivantes :

A) Conditions normales : extrait sec mélange collant à 52 %.

B) Traitement thermique des copeaux encollés selon lequel les copeaux encollés sont placés dans un sac plastique formé dans une étuve à 60°C pendant 75 minutes : un tel traitement a pour but de simuler le phénomène de prédurcissement de la résine.

C) Dilution du mélange collant à 46 % de façon à retarder la cuisson par dilution du mélange collant.

Pour chaque série on a mis en oeuvre une résine urée-formol qui présente les caractéristiques suivantes :

$$\frac{F}{U} = 1,07$$

| | |
|---|---|
| Extrait sec | 64,4 % |
| Viscosité | 360 mPa.s |
| Temps de gel à 80°C | 155 secondes |
| Taux de résine | 7 % résine sèche/copeaux secs |

Pour chaque série on a mis en oeuvre comme catalyseur : le chlorhydrate d'hexaméthylène-tétramine utilisé selon le procédé de l'invention (catalyseur 1 dans tableau 2) des catalyseurs connus à savoir :- (quantités exprimés en moles)

- chlorure d'ammonium = (1) (catalyseur 2 dans tableau 2),
- chlorure d'ammonium = (1) + $^{1}/_{2}$ hexaméthylène tétramine (catalyseur 3 dans tableau 2),
- chlorure d'ammonium = (1) + 1 hexaméthylène tétramine (catalyseur 4 dans tableau 2),
- chlorure d'ammonium = (1) + 1,5 hexaméthylène-tétramine (catalyseur 5 dans tableau 2).

Dans chaque cas, la quantité de catalyseur mise en oeuvre est telle que l'on dispose d'un équivalent molaire en acide chlorhydrique du système $NH_4cl$ à 1,5 % de chlorure d'ammonium sec par rapport au poids de la résine sèche.

Avec tous ces systèmes catalytiques on prépare des panneaux de particules en mettant en oeuvre les conditions suivantes :

| - Concentration du mélange collant | 52 % (pour essais A) | |
|---|---|---|
| | 46 % (pour essais C) | |
| - Prépressage<br>- Cuisson | 1 minute - pression<br> = Température<br>Pression<br>Durée | 5 da N/cm²<br>180°C<br>25 da N/cm²<br>4 minutes |

Le tableau 2 résume les caractéristiques des panneaux obtenus dans les différents essais.

On constate que la résine durcie selon le catalyseur mis en oeuvre selon le procédé de l'invention permet de fabriquer des panneaux de particules présentant de bonnes caractéristiques (Essai 1) que ce soit dans des conditions de prédurcissement de la résine ou dans des conditions limites de cuisson.

Exemple 3

L'exemple 2 est répété en mettant en oeuvre les catalyseurs suivants :
- catalyseur 1 : chlorhydrate d'hexaméthylène-tétramine
- catalyseur 2 : chlorure d'ammonium
- catalyseur 4 : chlorure d'ammonium + 1 hexaméthylène-tétramine.
On fabrique des panneaux de particules en faisant varier les temps de cuisson. Le tableau 3 résume les conditions opératoires et les caractéristiques des panneaux obtenus.
Les mesures ont été réalisées selon les normes suivantes :

| | |
|---|---|
| - Gonflement (%) | NFB 51252 |
| - Traction V 20 | NFB 51250 |
| - Teneur en formol (perforateur) | Norme EN 120 |

EP 0 348 255 B1

Tableau 2

| Durcisseurs | 1 | | | 2 | | | 3 | | | 4 | | | 5 | | |
|---|---|---|---|---|---|---|---|---|---|---|---|---|---|---|---|
| Type essai | A | B | C | A | B | C | A | B | C | A | B | C | A | B | C |
| Gonflements : 24 heures eau froide % | 15,2 | 14,3 | 13,2 | 14,3 | 21 | 12,2 | 13,9 | 14,8 | 13,4 | 15,8 | 14 | 16 | 18,5 | 17,5 | |
| Traction N/mm² pour masse volumique de 650 kg/m³ | 0,66 | 0,61 | 0,63 | 0,2 | 0,25 | 0,6 | 0,67 | 0,54 | 0,57 | 0,54 | 0,59 | 0,34 | 0,42 | 0,35 | |
| Formol perforateur mg/100 g | 12,3 | 12,8 | 12,3 | 10,7 | 12 | 12,1 | 10,2 | 10,5 | 12 | 12,1 | 11 | 11,7 | 12 | | |

Tableau 3

| Temps de cuisson secondes/mm épaisseur panneau | 9 | 10,5 | 12 | 13,5 | 15 |
|---|---|---|---|---|---|
| Traction ($N/mm_2$) pour masse volumique de 650 $kg/m_3$ | | | | | |
| Catalyseur 1 | 0,37 | 0,56 | 0,58 | 0,62 | 0,69 |
| Catalyseur 2 | 0,54 | 0,63 | 0,58 | 0,62 | 0,68 |
| Catalyseur 4 | 0,26 | 0,38 | 0,46 | 0,51 | 0,52 |
| Gonflement 24 heures eau froide : % | | | | | |
| Catalyseur 1 | 13,6 | 12,6 | 13,2 | 13,6 | 13,5 |
| Catalyseur 2 | 16,2 | 12,1 | 12,7 | 12,7 | 12,4 |
| Catalyseur 4 | 16,8 | 14,9 | 14,5 | 14,7 | 14,3 |

Exemple 4

On met en oeuvre une résine urée-formol contenant 4 % de mélamine et présentant un rapport molaire

7

F

NH$_2$

de 0,535.

On prépare du sulfate d'hexaméthylène-tétramine en mettant en oeuvre les réactifs suivants :

| | |
|---|---|
| - Solution aqueuse d'ammoniaque | à 25,5 % en masse. |
| - Solution aqueuse de formol | à 68 % |
| - Acide sulfurique | à 96 % |

On utilise le dispositif utilisé dans l'exemple 1. On introduit dans le réacteur du bas 356 grammes d'une solution aqueuse d'ammoniaque à 25,5 % (5,34 moles). Dans le réacteur du haut 357 grammes d'une solution aqueuse de formol à 67,2 % (8 moles) sont introduites, la température de cette solution étant maintenue à 85°C par circulation d'eau chaude dans la double enveloppe. On additionne le formol en 30 minutes, ce qui provoque une élévation de température qui est maintenue à 55°C.

En fin de réaction le pH est de 10. On introduit ensuite 68 grammes d'acide sulfurique à 96 en 10 minutes.Le pH du milieu réactionnel est alors de 35. La solution finale contient 45 % de sulfate de hexaméthylène-tétramine.

On réalise différentes compositions catalytiques en mettant en oeuvre des rapports molaires hexaméthylène-tétramine/formol/acide sulfurique différents. On introduit dans un tube à essais 10 grammes de résine urée-formol contenant de la mélamine 15 Cm$_3$ de solution de chlorure d'ammonium à 15 % et dans d'autres tubes à essais et différentes quantités de sulfate d'hexaméthylène-tétramine préparées de façon à ce que la quantité molaire d'acide soit équivalent à la quantité molaire de chlorure d'ammonium. Les temps de gel des mélanges collants, déterminés à 100°C sont résumés dans le tableau 4. Avec le chlorure d'ammonium le temps de gel est de 130 secondes.

Tableau 4

| SULFATE D'HEXAMETHYLENE-TETRAMINE (grammes) | ACIDE SULFURIQUE (grammes) | COMPOSITION CATALYSEUR -RAPPORT MOLAIRE HEXAMETHYLENE -TETRAMINE/H + | TEMPS DE GEL A 100°C (secondes) |
|---|---|---|---|
| 0,106 | 0,1099 | 0,2 | 75 |
| 0,212 | 0,0824 | 0,4 | 135 |
| 0,318 | 0,0550 | 0,6 | 245 |
| 0,424 | 0,0275 | 0,8 | 380 |
| 0,530 | 0 | 1 | 580 |

## Revendications

1. Procédé de durcissement, à l'aide d'un catalyseur de durcissement, de résines aminoplastes destinées notamment à permettre, lorsqu'elles sont à l'état de solution, l'imprégnation et l'agglutination de particules de bois et similaires, pouvant être à l'état chaud, pour donner des panneaux préformés que l'on soumet ensuite à un pressage à chaud pour donner des panneaux de particules, le durcissement devant être maîtrisé lors de la fabrication des panneaux préformés et un potentiel de durcissement devant être conservé pour le pressage à chaud, caractérisé en ce que l'on utilise, comme catalyseur de durcissement, un sel d'acide fort d'hexaméthylène-tétramine, l'acide étant choisi parmi l'acide chlorhydrique ou sulfurique.

2. Procédé de durcissement selon la revendication 1, caractérisé en ce que la quantité du sel d'acide fort d'hexaméthylène-tétramine est comprise entre 0,1 et 10% en poids par rapport au poids de la solution de résine.

3. Procédé de durcissement selon l'une des revendications 1 et 2, caractérisé en ce que les sels d'acide fort d'hexaméthylène-tétramine sont préparés à partir d'une solution aqueuse d'ammoniaque et d'une solution aqueuse de formol, le formol et l'ammoniaque étant utilisés dans un rapport molaire F/NH₃ de 1,5, la solution de formol étant ajoutée chaude dans la solution d'ammoniaque, le milieu basique étant ensuite acidifié par addition d'un acide fort en quantité telle que le pH de la solution finale soit compris entre 1 et 7.

4. Procédé de durcissement selon l'une des revendications 1 à 3, caractérisé en ce que le sel d'acide fort d'hexaméthylène-tétramine est soit ajouté à la résine au moment de l'emploi, soit l'hexaméthylène-tétramine est incorporé préalablement à la résine aminoplaste et l'acide fort est ajouté au moment de l'application, soit le sel d'acide fort d'hexaméthylène-tétramine est ajouté préalablement à la résine aminoplaste et une quantité supplémentaire d'acide fort ou d'hexaméthylène-tétramine est ajoutée de façon à dépasser les quantités stoechiométriques d'acide fort ou d'hexaméthylène-tétramine.

## Claims

1. Process for curing, using a curing catalyst, amino plastic resins intended particularly to make possible, when they are in the dissolved state, the impregnation and agglutination of wood and similar particles, which can be in the hot state, to give preformed boards which are then subjected to a hot pressing in order to give particle boards, the curing having to be controlled during the manufacture of the preformed boards and a curing potential having to be retained for the hot pressing, characterized in that there is used, as curing catalyst, a hexamethylenetetramine salt of a strong acid, the acid being chosen from hydrochloric or sulphuric acid.

2. Curing process according to Claim 1, characterized in that the quantity of the hexamethylenetetramine salt of a strong acid is between 0.1 and 10% by weight relative to the weight of the resin solution.

3. Curing process according to either of Claims 1 and 2, characterized in that the hexamethylenetetramine salts of a strong acid are prepared from an aqueous ammonia solution and from an aqueous solution of formaldehyde, the formaldehyde and the ammonia being employed in an F/NH₃ molar ratio of 1.5, the formaldehyde solution being added hot to the ammonia solution, the basic medium being then acidified by addition of a strong acid in such quantity that the pH of the final solution is between 1 and 7.

4. Curing process according to one of Claims 1 to 3, characterized in that the hexamethylenetetramine salt of a strong acid is either added to the resin at the time of use, or hexamethylenetetramine is incorporated beforehand in the amino plastic resin and the strong acid is added at the time of application, or the hexamethylenetetramine salt of a strong acid is added beforehand to the amino plastic resin and an additional quantity of a strong acid or of hexamethylenetetramine is added so as to exceed the stoichiometric quantities of strong acid or of hexamethylenetetramine.

## Patentansprüche

1. Verfahren zur Härtung von Aminoplastharzen mit einem katalytisch wirkenden Härter, die, wenn sie flüssig vorliegen, insbesondere dafür bestimmt sind, die Imprägnierung und Verklebung von Holzpartikeln u.dgl. zu ermöglichen, wobei dies in der Wärme erfolgen kann, zur Erzeugung vorgeformter Platten, aus denen anschließend durch Heißpressen Spanplatten erzeugt werden, wobei die Härtung bei der Herstellung der vorgeformten Platten so kontrolliert werden muß, daß ein Potential zum Härten für das Heißpressen erhalten bleibt, **dadurch gekennzeichnet**, daß als katalytisch wirkender Härter ein Salz aus Hexamethylentetramin und einer starken Säure, die ausgewählt ist unter Chlorwasserstoffsäure und Schwefelsäure, verwendet wird.

2. Verfahren zur Härtung nach Anspruch 1, dadurch gekennzeichnet, daß die Menge des Salzes aus einer starken Säure und Hexamethylentetramin 0,1 bis 10 Gew.-%, bezogen auf das Gewicht der Harzlösung, beträgt.

3. Verfahren zur Härtung nach einem der Ansprüche 1 und 2, dadurch gekennzeichnet, daß die Salze aus einer starken Säure und Hexamethylentetramin aus einer wäßrigen Ammoniaklösung und einer wäßrigen Formaldehydlösung hergestellt werden, wobei Formaldehyd und Ammoniak in einem Molmassenverhältnis F/NH$_3$ von 1,5 verwendet werden, die Formaldehydlösung erwärmt in die Ammoniaklösung gegeben wird und das basische Medium anschließend durch Zugabe einer so großen Menge einer starken Säure angesäuert wird, daß der pH-Wert der fertigen Lösung 1 bis 7 beträgt.

4. Verfahren zur Härtung nach einem der Ansprüche 1 bis 3, dadurch gekennzeichnet, daß entweder das Salz aus starker Säure und Hexamethylentetramin dem Harz zum Zeitpunkt der Verwendung zugesetzt wird oder Hexamethylentetramin zuvor in das Aminoplastharz eingebracht und die starke Säure zum Zeitpunkt der Anwendung zugesetzt wird oder das Salz aus starker Säure und Hexamethylentetramin zuvor dem Aminoplastharz zugesetzt wird und eine zusätzliche Menge an starker Säure oder Hexamethylentetramin so zugegeben wird, daß die stöchiometrischen Mengen an starker Säure oder Hexamethylentetramin überschritten werden.